(19) Europäisches Patentamt
European Patent Office
Office européen des brevets

(11) **EP 1 018 495 B1**

(12) **EUROPÄISCHE PATENTSCHRIFT**

(45) Veröffentlichungstag und Bekanntmachung des Hinweises auf die Patenterteilung:
**19.05.2004  Patentblatt 2004/21**

(51) Int Cl.⁷: **C04B 35/622**, C04B 20/00

(21) Anmeldenummer: **00105971.6**

(22) Anmeldetag: **20.01.1997**

(54) **Verfahren zur Herstellung von Mikrohohlfasern aus keramischem Material**

Method of making hollow microfibres of ceramic material

Procédé de fabrication de microfibres creuses en materiau ceramique

(84) Benannte Vertragsstaaten:
**AT BE CH DE DK ES FI FR GB GR IE IT LI LU MC NL PT SE**

(30) Priorität: **21.01.1996  DE 19601904**
**23.01.1996  DE 19602234**
**22.07.1996  DE 19629411**

(43) Veröffentlichungstag der Anmeldung:
**12.07.2000  Patentblatt 2000/28**

(62) Dokumentnummer(n) der früheren Anmeldung(en) nach Art. 76 EPÜ:
**97901566.6 / 0 874 788**

(73) Patentinhaber: **Rennebeck, Klaus**
**73240 Wendlingen (DE)**

(72) Erfinder: **Rennebeck, Klaus**
**73240 Wendlingen (DE)**

(74) Vertreter:
**Patentanwälte Hosenthien-Held und Dr. Held**
**Klopstockstrasse 63**
**70193 Stuttgart (DE)**

(56) Entgegenhaltungen:
**EP-A- 0 195 353          WO-A-94/23829**
**US-A- 4 268 278**

• **DATABASE WPI Week 9007 Derwent Publications Ltd., London, GB; AN 90-048943 XP002031020 & JP 02 002846 A (NOK CORP.), 8. Januar 1990 (1990-01-08)**

**Beschreibung**

Die Erfindung betrifft ein Verfahren zur Herstellung von Mikrohohlfasern aus keramischem Material oder von grünen Mikrohohlfasern.

Die Herstellung von kompakten keramischen Fasern, d.h. Von Fasern, die kein Lumen, also keinen Hohlraum in der Mitte der Fasern in ihrer Längsrichtung aufweisen, ist bekannt. Sie bestehen meistens weitgehend oder gänzlich aus einer Glasphase und werden beispielsweise als Gewebe, Gewirke und Spinnvliese in Isoliermaterialien und als Hitzeschutzschild, zur Armierung von metallischen Werkstücken und in Verbundwerkstoffen eingesetzt. Diese Fasern sind in verschiedenen Anwendungsbereichen unzulänglich, beispielsweise im Hinblick auf Elastizität, Biegefestigkeit sowie Isolationswirkung. Darüber hinaus ist es wünschenswert, das Gewicht der bekannten Fasern zu senken und die Spinngeschwindigkeit anzuheben.

Die oben angesprochenen Nachteile werden durch bekannte Hohlfasern aus polymeren Kunststoffen nicht behoben. Diese werden aufgrund ihrer Besonderheiten im Membranflächengeweben für Kleidung, Dachverkleidung, Zeltplanen, Membranen usw. eingesetzt. Hier sind im allgemeinen jedoch die biologische Verträglichkeit sowie die chemische und thermische Beständigkeit unzulänglich. Sie haben außerdem den Nachteil, dass hieraus hergestellte Membranen eine vergleichsweise geringe Penetrationsgeschwindigkeit aufweisen und nicht gegengespült und nicht gereinigt werden können.

Es sind keramische Hohlfasern bekannt, die große Wandstärken und große Außendurchmesser und vergleichsweise große Schwankungen ihrer Abmessungen aufweisen und teilweise auch nur in geringen Längen hergestellt werden können.

Die WO 94/23829 beschreibt beispielsweise keramische Hohlfasern mit einem Außendurchmesser von insbesondere 0,5 bis 10 mm und einer Wandstärke von 30 bis 500 μm, die durch Extrudieren einer keramisches Pulver enthaltenden Paste, Entfernung des Bindemittels und Sintern hergestellt werden.

Aus der EP 0 195 353 A2 ist die Herstellung von Titaniumoxid Mikrohohlfasern bekannt, die eine Wandstärke von 0,05 bis 20 μm und einen Außendurchmesser von weniger als 50 μm haben. Zur Herstellung wird eine Kohlenstoff-Faser für 10 Minuten bis 36 Stunden in eine Lösung mit metallischen Salzen oder Komplexen getaucht und anschließend getrocknet. Zum Schluss wird die Kohlenstoff-Faser oxidiert und dadurch entfernt.

Der Erfindung lag daher die Aufgabe zugrunde, ein Verfahren zur Herstellung von Mikrohohlfasern zur Verfügung zustellen, welche die oben genannten Mängel der bekannten Fasern nicht aufweisen, insbesondere hohe Elastizität, hohe Biegefestigkeit, gute Isolationswirkung und gute biologische Verträglichkeit aufweisen und darüber hinaus mit hoher Produktionsgeschwindigkeit hergestellt werden können. Darüber hinaus sollen zu deren Herstellung bestehende Chemie-Faser-Spinnvorrichtungen benutzt werden können.

Erfindungsgemäß wird diese Aufgabe gelöst durch ein Verfahren zur Herstellung von Mikrohohlfasern aus keramischem Material oder von grünen Mikrohohlfasern, wobei eine Dispersion und/oder Suspension, die den Vorläufer eines keramischen Materials und ein unter Hitzeeinwirkung entfernbares Bindemittel enthält, zu grünen Mikrohohlfasern ausgeformt und das Bindemittel gegebenenfalls unter Hitzeeinwirkung entfernt wird, wobei der Hohlraum in Form eines Lumens ausgebildet ist und wobei die Mikrohohlfaser eine Wandstärke von 0,01 bis 15 μm und einen Außendurchmesser von 0,5 bis 35 μm aufweist und die Schwankung von Wandstärke und Außendurchmesser nicht mehr als +/- 6% beträgt.

Eine Wandstärke von weniger als etwa 0,01 μm läßt sich fertigungstechnisch nur schwierig erzielen und würde, wenn es möglich wäre, den Nachteil zeigen, daß die innere bzw. äußere Oberfläche der Hohlfasern ungleichmäßig ist und gegebenenfalls nachträglich aufgebrachte B schichtungen Fehlstellen, wie Löcher oder uneinheitliche Dicke, aufweisen würde. Das Überschreiten einer Wandstärke von etwa 15 μm würde beim Einsatz der erfindungsgemäßen Hohlfasern zur Stofftrennung durch Permeation lediglich dazu führen, daß der Permeatfluß schlechter wird, da das Permeat eine größere Strecke zurücklegen muß, während die Selektivität nicht weiter verbessert wird. Bevorzugt ist es, wenn die Wandstärke etwa 0,3 bis 6 μm, insbesondere etwa 0,5 bis 3 μm, beträgt.

Wird der Außendurchmesser von 0,5 μm unterschritten, dann weist die Hohlfaser ein zu kleines Lumen auf und der Fluß von Flüssigkeiten durch die Faser wird behindert. Ein Überschreiten des Außendurchmessers von 35 μm führt dazu, daß die Flexibilität der Hohlfaser eingeschränkt ist bzw. Stofftrennmodule, die aus einer Vielzahl erfindungsgemäßer Hohlfasern aufgebaut sind, bezogen auf ihre Permeat-Flußmenge, zu voluminös werden. Bevorzugt ist es, daß der Außendurchmesser etwa 1 bis 25 μm, insbesondere etwa 1 bis 10 μm und ganz besonders 5 bis 10 μm, beträgt.

Erfindungsgemäße Mikrohohlfasern werden vorzugsweise als Endlosfasern hergestellt und sind von besonderem Wert, wenn ihre Wandstärke und ihr Außendurchmesser nicht mehr als +/- 6 %, insbesondere nicht mehr als +/- 2,5 % schwanken, d.h. es handelt sich um vorteilhaft gleichmäßig ausgebildete Mikrohohlfasern. Dies bedeutet bei der praktischen Anwendung, daß die erfindungsgemäßen Hohlfasern entlang ihrer Länge einheitliche Eigenschaften aufweisen. Kurzschnittfasern, die durch Ablängen von Endlosfasern hergestellt werden, weisen den Vorteil auf, daß sie von Nadelfasern, d.h. Fasern mit einer Länge von weniger als 3 μm, die als gesundheitsgefährdend gelten, frei sind.

Typischerweise liegt der Außendurchmesser der erfindungsgemäßen Mikrohohlfaser in der Größenordnung von etwa 7 µm, die Wandstärke bei etwa 1 µm und somit der Innendurchmesser, der dem Außendurchmesser des Lumens entspricht, in der Größenordnung von 5 µm. Gegenüber einer Kompaktfaser ohne Lumen ergibt sich somit eine Material- und Gewichtseinsparung von etwa 10 bis 95 %, typischerweise von etwa 40 bis 60 %. Hiermit ist auch eine erhebliche Kosteneinsparung, bezogen auf Material- und Herstellungskosten, verbunden.

Wenn im Rahmen der Erfindung von "keramischen Material" gesprochen wird, dann soll dies im weitestgehenden Sinne verstanden werden: Dabei soll es sich um eine Sammelbezeichnung für aus anorganischen und überwiegend nichtmetallischen Verbindungen oder Elementen aufgebaute Materialien handeln, die insbesondere zu mehr als 30 Vol.% kristallisierte Materialien darstellen. In diesem Zusammenhang sei verwiesen auf Römpp Chemie Lexikon, 9. Aufl., Bd.3, 1990, S.2193 bis 2195: Vorzugsweise bestehen die erfindungsgemäßen Keramikhohlfasern aus einem oxidischen, silicatischen, nitridischen und/oder carbidischen Keramikmaterial. Besonders bevorzugt sind solche erfindungsgemäßen Keramikhohlfasern auf der Basis von Aluminiumoxid, Calciumphosphat (Apatit) oder verwandten Phosphaten, Porzellan- oder Cordierit-artigen Zusammensetzungen, Mullit, Titanoxid, Titanaten, Zirkonoxid, Zirkonsilicat, Zirkonaten, Spinellen, Smaragd, Saphir, Korund, Nitriden oder Carbiden von Silicium oder anderen chemischen Elementen oder deren Mischungen. Als Dotierungsmittel werden gegebenenfalls die in der Keramik bekannten Stoffe, wie $MgO$, $CaO$, $ZrO_2$, $ZrSiO_4$, $Y_2O_3$ u.a. oder deren Vorläufer den anorganischen Hauptbestandteilen zugesetzt.

Die erfindungsgemäßen Mikrohohlfasern aus keramischen Material können bei einem vergleichsweise schwachen Brennen porös und semipermeabel gestaltet werden. Derartige Mikrohohlfasern können insbesondere eine innere spezifische Oberfläche, gemessen nach BET unter Einsatz von Stickstoffadsorption oder Quecksilberporosimetrie im Bereich von etwa 600 bis 2000 $m^2$/g aufweisen. Sie sind aufgrund ihrer anorganischen Natur in der Regel hydrophil und können zur Stofftrennung verwendet werden, wobei das Permeat vorzugsweise von außen durch die semipermeable Wandung nach innen zum Lumen tritt und an den Enden der Fasern austritt, obwohl eine Stofftrennung auch in umgekehrter Richtung erfolgen kann. Diese Mikrohohlfasern können eine sehr gute Trennwirkung im Mikro-, Ultra- und Nano-Bereich zeigen. Die abgetrennten Stoffe lassen sich an den Mikrohohlfasern bei der mikroskopischen Begutachtung wahrnehmen. Eine derartige Stofftrennung kann z.B. für die Reinigung bzw. Trennung von Gasen/Gasgemischen, wie Luft oder Flüssigkeiten, Blut oder Wasser, genutzt werden, aber auch für Heißgase oder Schmelzen. Hierzu empfiehlt es sich bisweilen, daß die Mikrohohlfasern eine Trennbeschichtung tragen, deren Wandstärke vorzugsweise 2,5 µm oder weniger, insbesondere weniger als 0,5 µm und ganz besonders bevorzugt etwa 0,1 µm beträgt. Die Trennbeschichtung kann im wesentlichen aus anorganischen oder organischen Molekularsieben, z.B. aus einem zeolitischen Material oder aus anorganischen oder organischen Trennschichten, z.B. aus Estern, Silanen oder Siloxanen, bestehen. Der Auftrag erfolgt durch an sich bekannte Verfahren, wie z.B. das CVD-Verfahren (Chemical Vapour Deposition) oder PVD-Verfahren (Physical Vapour Deposition), galvanische und/oder Sedimentationsverfahren.

Außerdem können die mit einer anorganischen trennbeschichteten keramischen Mikrohohlfaser gebrannt werden. Darüber hinaus besteht jedoch auch die Möglichkeit, die nachfolgend geschilderten grünen Mikrohohlfasern mit dieser Trennbeschichtung zu versehen und diesen Gesamtverbund einem Brennen zu unterziehen.

Die keramischen Mikrohohlfasern können bei einem vergleichsweise starken Brennen dicht und impermeabel gestaltet werden. Die Verdichtung des Materials wird vor allem durch Sintern oder Verglasen erreicht. Derartige erfindungsgemäße Mikrohohlfasern können aufgrund der dichtgebrannten Wand insbesondere hochvakuumdicht, gut lichtleitend und besonders schwimm- und flugfähig sein.

Die gebrannten erfindungsgemäßen Mikrohohlfasern sind auch aufgrund ihrer anorganischen Natur korrosionsbeständig, unbrennbar, unverrottbar, allwetterfest, physiologisch unbedenklich, biokompatibel, transparent, wärmedämmend sowie in der Regel elektrisch isolierend und oxidationsbeständig. Sie können als Sicherheitsfasern bewertet werden und sind in der Regel für elektromagnetische Strahlungen durchlässig. Sie weisen keine kanzerogenen Nadelmineraleigenschaften auf. Sie sind häufig transparent sowie farblos oder farbig herstellbar, je nach Zusammensetzung und Herstellungsbedingungen. Sie können aber auch opak sein. Ihr Gewicht je Faserlänge (Titer) liegt in der Größenordnung von etwa 10 bis 100 g/km (tex), typischerweise bei etwa 40 g/km. Die erfindungsgemäßen Mikrohohlfasern sind üblicherweise bis 1000°C, insbesondere bis 1300°C und sogar noch weit darüber hinaus temperaturbeständig bzw. temperaturwechselbeständig, was vorwiegend von der chemischen Zusammensetzung abhängt.

Zur Herstellung der erfindungsgemäßen Mikrohohlfasern wird vorzugsweise eine Emulsion, Dispersion und/oder Suspension, die den Vorläufer eines keramischen Materials und ein unter Hitzeeinwirkung entfernbares Bindemittel enthält, in an sich bekannter Weise zu grünen Mikrohohlfasern ausgeformt und das Bindemittel unter Hitzeeinwirkung entfernt. Die Dispersion kann wechselnde Mengen, z.B. bis zu 95 Gew.-%, vorzugsweise etwa 40 bis 70 Gew.-%, an Dispersionsmedium enthalten. Ein Dispersionsmedium kann auch entfallen, wenn das Bindemittel z.B. thermoplastisch ist und ohne nennenswerte Zersetzung zu einer niedrig viskosen Masse aufgeschmolzen werden kann. In Einzelfällen hat es sich gezeigt, daß bereits die grünen Mikrohohlfasern vorteilhafte Verwendungsmöglichkeiten erschließen, so daß dann die abschließende Hitzebehandlung entfällt.

Im Rahmen der Erfindung kommen insbesondere als keramische Vorläufer bzw. Precursor in Frage: Tonminerale, insbesondere Kaolin, Illit, Montmorillit, Metallhydroxide, wie Aluminiumhydroxid, gemischte Metallhydroxide/-oxide, wie AlOOH, gemischte Metalloxide/-halogenide, Metalloxide, wie BeO, MgO, $Al_2O_3$, $ZrO_2$ und $ThO_2$, Metallnitrate, wie $Al(NO_3)_3$, Metallalkoholate, insbesondere Aluminiumalkoholate, wie $Al(iPrO)_3$, $Al(sec\text{-}BuO)_3$, Magnesium-Alumosilicate, Feldspäte, Zeolithe, Böhmite oder Mischungen zweier oder mehrerer der genannten Materialien.

Bei der Hitzebehandlung von $Al_2(OH)_5Cl$ $2\text{-}3H_2O$ finden z.B. nacheinander folgende Umwandlungen statt, wobei schließlich $\alpha\text{-}Al_2O_3$ erhalten wird:

$$Al_2(OH)_5Cl^- \; 2\text{-}3H_2O \Rightarrow Al(OH)_3\text{-Gel} \Rightarrow \gamma\text{-}Al_2O_3 \Rightarrow \alpha\text{-}Al_2O_3$$

Die mittlere Korngröße des keramischen Vorläufermaterials liegt unter etwa 2 μm, insbesondere unter etwa 1 μm und besonders bevorzugt unter etwa 0,1 μm. Vorzugsweise liegt das keramische Vorläufermaterial kolloidal, d. h. als Sol oder Gel, oder molekular gelöst vor. Zwischen der Sol- und Gelform sind reversible Umwandlungen möglich. Das im Rahmen der Erfindung eingesetzte Bindemittel kann in bevorzugten Ausführungsformen als Schutzkolloid für das kolloidale keramische Vorläufermaterial wirken, so z.B. Polyvinylalkohol, Gelatine oder Eiweiße.

Bei der Wahl des im Rahmen des erfindungsgemäßen Verfahrens unter Hitzeeinwirkung entfernbaren Bindemittels besteht keine kritische Beschränkung. Es ist allerdings bevorzugt, daß uas Bindemittel filmbildend ist. Dabei kann es sich beispielsweise um Harnstoff, Polyvinylalkohol, Wachs, Gelatine, Agar, Eiweiß, Saccharide handeln. Gegebenenfalls können zusätzlich organische Hilfsmittel, wie Binder, Stellmittel, Entschäumer und Konservierer, herangezogen werden. Die Vermischung aus dem Vorläufer des keramischen Materials und dem unter Hitzeeinwirkung entfernbaren Bindemittel liegt in Form einer Dispersion vor, wobei dieser Begriff weitgefaßt zu sehen ist. Es kann sich dabei insbesondere handeln um Emulsionen, Suspensionen, dies regelmäßig in Form einer Paste. Bei der Wahl des Dispersionsmediums besteht weitgehende Freiheit. Im allgemeinen wird es Wasser sein. Denkbar ist jedoch als Flüssigkeit auch ein organisches Lösungsmittel, wie Alkohole oder Aceton, gegebenenfalls auch in Vermischung mit Wasser. Besonders vorteilhaft sind hier sogenannte Sol-Gel-Prozesse, z.B. auf der Basis von dem bereits angesprochenen Polyvinylalkohol.

Bevorzugte Dispersionen enthalten etwa 20 bis 70 Gew.-% keramisches Vorläufermaterial, etwa 10 bis 40 Gew.-% Bindemittel, 0 bis etwa 70 Gew.-% Dispersionsmedium sowie bis zu etwa 30 Gew.-% fakultative Bestandteile.

Um die erfindungsgemäßen Mikrohohlfasern auszuformen, sind beliebige Formungsverfahren geeignet, insbesondere das Blasverfahren, das Extrusionsverfahren, das Vakuum-Extrusionsverfahren oder das Spinnverfahren, so auch das in der WO 94/23829 angesprochene Verfahren, bei dem eine Paste hergestellt wird, die ein polymeres Bindesystem enthält. Allerdings wird bei diesem Verfahren ausdrücklich ein keramisches Pulver, demzufolge in Kristallitform, eingesetzt, was regelmäßig bei der Durchführung des erfindungsgemäßen Verfahrens nicht geeignet ist. Vielmehr wird der erfindungsgemäße angestrebte Erfolg dann gewährleistet, wenn solche Kristallite ausgeschlossen werden.

Das Extrudieren kann als Naß-, Schmelz- oder Trockenextrusion bei etwa Rauintemperatur oder bei der Temperatur einer Schmelze einer aufgeschmolzenen organischen Substanz oder Stoffmischung erfolgen. Von besonderem Vorteil ist bei den angesprochenen Formgebungsverfahren das Spinnverfahren. Dieses ist dadurch gekennzeichnet, daß die Dispersion in einen Aufgabebehälter oder ein Druckgefäß einer Spinnvorrichtung gegeben, die Dispersion strömend bei einer Temperatur von etwa 20 bis 400°C durch die Spinnvorrichtung gefördert und durch Düsenringöffnungen oder Düsenprofilöffnungen gepreßt wir ', deren Öffnungsdurchmesser oder Öffnungsweiten vorzugsweise etwa 0,1 bis 150 μm betragen, die im Bereich der Düsenöffnungen erzeugten Teilströme mittig durch Kerne und/oder durch Einrichtungen zum Einblasen eines Gases geteilt werden und die Teilstrome durch Erwärmen, durch Bestrahlen oder durch Zutritt eines Reaktionspartners zu grünen Mikrohohlfasern verfestigt und gegebenenfalls das Bindemittel unter Hitzeeinwirkung entfernt wird. Die angesprochene Spinnvorrichtung ist bevorzugt eine Anlage zur Chemie-Faserfilament-Produktion, die jedoch nicht thermisch beheizt sein muß. Es kann eine konventionelle Spinnvorrichtung verwendet werden, die gegebenenfalls bezüglich der Düsen und gegebenenfalls bezüglich der Verfestigungseinrichtung angepaßt werden muß. Eine Verfestigung der grünen Mikrohohlfasern erfolgt beispielsweise durch Verdampfung des Dispersionsmediums beim Austritt aus der Düsenöffnung in eine Umgebung, die gegenüber dem Spinnkolben einen niedrigeren Druck aufweist. Die Verfestigung kann auch durch Zutritt eines Reaktionspartners für das Bindemittel oder das keramische Material erfolgen. Der Reaktionspartner kann gasförmig sein und den ausgetragenen Fasern entgegenströmen, oder flüssig sein und als Fällbad vorliegen, durch das die ausgetragenen Fasern geleitet werden.

Ein Vorteil des erfindungsgemäßen Verfahrens liegt darin, daß ein Heizen oder Erwärmen des keramischen Ausgangsmaterials in der Regel nicht oder nur hinter den Düsen zur Verfestigung des Ausgangsmaterials im Hinblick auf die grünen Mikrohohlfasern erforderlich ist. Die Spinnvorrichtung wird vorzugsweise so ausgestaltet, daß sie eine hohe Anzahl an Düsen hat. Der sich hinter dem die Düsen aufweisenden Extrusionskopf anschließende Kanal kann meist recht kurz gehalten werden und ist vorzugsweise etwa 0,1 bis 0,3 m lang. Im Vergleich zu Chemie-Faser-Produktion kann die Spinnvorrichtung trotz der häufig deutlich niedrigen Temperatur des Materialstroms jedoch im gleichen Druckniveau wie bei der Herstellung von Chemie-Fasern betrieben werden. Die Temperaturen des Materialstroms liegen bei dem erfindungsgemäßen Verfahren üblicherweise nur geringfügig über der Raumtemperatur.

Beim Schmelzextrusionsverfahren werden Temperaturen gewählt, die eine gute Verarbeitbarkeit der organischen Schmelze gewährleisten, so daß hier im Einzelfall Temperaturen bis zu 400°C gewählt werden. Es ist darauf zu achten, daß der Materialstrom in der Spinnvorrichtung nicht unterbrochen wird.

Das Lumen der Mikrohohlfasern kann durch in die Teilströme im Bereich der Düsen eingebrachte Kerne oder Einrichtungen zum Einblasen eines Fluids, wie Sauerstoff, Stick. stoff, Luft oder eines anderen Gasgemisches, erzeugt werden. Die Öffnungen der Düsen können so gestaltet sein, daß eine möglichst große Zahl von Düsen, z.B. auf engstem Raum mehrere Tausend, regelmäßig angeordnet sind. Ringöffnungen bzw. Profilöffnungen mit einem nicht ringförmigen Querschnitt können ohne stegförmige Halterungen auskommen, wenn beispielsweise jeweils ein Kern oder mehrere gegebenenfalls verdrillte Kerne, z.B. sehr dünne Fasern, zentrisch in Stromrichtung in einer Düse geführt werden. Bei einem Blasverfahren können Injektionsdüsen ohne oder mit einem oder mehreren Kernen angewandt werden. Die angesprochenen Düsenöffnungen bei den jeweiligen Herstellungsverfahren haben vorzugsweise einen Durchmesser oder eine größte Weite von etwa 150 μm, insbesondere etwa 120 μm und ganz besonders bevorzugt von 80 oder sogar 50 μm, insbesondere beim Brennen stärker schwindender Materialien. Insbesondere für geringer schwindende Materialien werden vorzugsweise Öffnungen verwendet, die einen Durchmesser oder eine größte Weite von etwa 90 μm, besonders bevorzugt von 60 μm und ganz besonders bevorzugt von 30 μm aufweisen. Die Öffnungen sind unter Umständen um ein Vielfaches weiter als die Durchmesser bzw. Profilweiten der gebrannten erfindungsgemäßen Mikrohohlfasern, da regelmäßig beim Brennen eine sehr starke Schwindung auftritt, die oft etwa 50 bis 95 % für eine Schwindung aus Endabmessung zu Anfangsabmessung (Technisches Aufmaß) beträgt. Bei einer geringen Schwindung liegt diese eher im Bereich von 10 bis 60 %.

Die Spinngeschwindigkeiten liegen beim erfindungsgemäßen Spinnverfahren vorzugsweise zwischen etwa 400 bis 8000 m/min.

Im Gegensatz zu Verfahren zum Spinnen von Chemie-Fasern tritt die haut- und fadenbildende Spinnmasse häufig nur bei etwa Raumtemperaturen und nicht, wie bei Chemie-Fasern bei Temperaturen von etwa 200 bis 500°C aus den Düsen aus. Die Teilströme der Spinnmasse, die die Stränge der zu bildenden Mikrohohlfasern darstellen, können durch . Erwärmen oder durch Bestrahlen mit UV-, sichtbarem oder IR-Licht oder durch Luftzutritt zu grünen Mikrohohlfasern verfestigt und dabei gegebenenfalls getrocknet werden. Das Erwärmen kann u.a. in Heißluft, in einem heißen Konvektionsstrom oder durch Strahlungswärme erfolgen und erfolgt in der Regel bei einer Temperatur bis zu nur 100°C. Nach der Verfestigung der grünen Mikrohohlfasern können diese noch gestreckt werden, um die Wandstärken und Außendurchmesser zu verändern und die Eigenschaften der Fasern, auch die Festigkeit und gegebenenfalls auch die Permeabilität zu verbessern bzw. Zu verändern. Die die Mikrohohlfasern bildenden Stränge (Teilströme) zeigen vor der Verfestigung vorzugsweise Wandstärken von etwa 0,5 bis 50 μm sowie Außendurchmesser von etwa 1 bis 160 μm sowie nach der Verfestigung vorzugsweise Wandstärken von etwa 0,4 bis 45 μm, besonders bevorzugt von etwa 1 bis 25 μm, sowie Aussendurchmesser von 0,8 bis 155 μm, insbesondere von 8 bis 55 μm und ganz besonders bevorzugt von etwa 12 bis 24 μm. Die Schwankung der Wandstärke bzw. der Außendurchmesser liegt vorzugsweise im Bereich von ≤ +/- 5 %, insbesondere ≤ +/- 2 %.

Mikrohohlfasern, die in ungebranntem Zustand als Textilhohlfasern eingesetzt werden sollen, können nach dem Austritt aus den Düsen und nach der Verfestigung durch Aufheizen aufgespult und gegebenenfalls auch ohne zusätzliche Behandlung geschnitten und weiterverarbeitet werden. Sie sind verwebbar, verstrickbar, verfilzbar, verknotbar und anderweitig textil verarbeitbar sowie bei Bedarf metallisierbar.

Die ungebrannten oder gebrannten Mikrohohlfasern können zu Whiskern, Kurzfasern, Langfasern, Stapelfasern, Häckseln, Gelegen, Filamenten, Geweben, Vliesen, Gestricken, Gewirken, Filzen, Rovings, Folien, Papierlagen, Fäden, Seilen, Netzen und dergleichen verarbeitet und zu Filament-Modulen, Laminaten, Preforms, Prepregs und dergleichen weiterverarbeitet werden. Beispielsweise kann ein Filament als Schichtträger in Form einer Kreisscheibe oder Rechtecklage hergestellt, gegebenenfalls durch Stapeln mehrerer Filamente zu Modulen weiterverarbeitet werden. Derartige Module können u.a. als Membran-Module eingesetzt werden.

Im gesamten Ablauf der Herstellung der erfindungsgemäßen Mikrohohlfasern können weitere Verfahrensschritte zwischen- oder nachgeschaltet sein. Die Verarbeitung der Mikrohohlfasern sowie die Weiterverarbeitung geschieht nach an sich bekannten Verfahrensschritten mit an sich bekannten Vorrichtungen. Die ungebrannten keramischen Mikrohohlfasern können nach an sich bekannten Verfahren der technischen Keramik gebrannt werden, wodurch der keramische Werkstoff fertiggestellt wird. Hierbei handelt es sich z.B. um folgende Brennverfahren: Gas-, Schutzgas-, oder Elektrobrennverfahren.

Die gebrannten Mikrohohlfasern gemäß der Erfindung weisen die vorstehend bereits behandelten Dimensionen auf.

Die ungebrannten bzw. grünen Mikrohohlfasern sowie die gebrannten keramischen Mikrohohlfasern gemäß der Erfindung zeigen alle Eigenschaften, die für textile Fasern typisch und erforderlich sind, um z.B. zu Gelegen, Filamenten, Geweben, Gestricken, Filzen, Vliesen und Folien verarbeitet zu werden. Aufgrund dessen, daß die Mikrohohlfaser gemäß der Erfindung nur sehr geringe Abmessungsschwankungen unterliegen, ist das Streuband der Außendurchmesser sehr gering. So werden bei geeigneter Verfahrensführung keine Mikrohohlfaser eines Durchmessers von weniger als 3 μm erzeugt, die als kanzerogen angesehen werden könnten. Die erfindungsgemäßen Mikrohohlfasern können als sogenannte Endlosfasern eingesetzt werden und sich außerdem shot-frei. Sie können vergleichsweise umweltfreundlich hergestellt werden, sind nicht umweltschädlich und können darüber hinaus recycliert werden. Sie können bekannte Fasern ohne Lumen und Hohlfasern sowie Drähte und Litzen, insbesondere aus Polymeren, Kohlenstoff usw., ersetzen.

Es muß insbesondere als überraschend angesehen werden, daß die verfestigten grünen Mikrohohlfasern verwebt werden können und eine Zugfestigkeit aufweisen, die der von handelsüblichen polymeren Fasern entspricht. Ferner war es überraschend, daß die erfindungsgemäßen keramischen Mikrohohlfasern mit einer Trennschicht versehen werden können, die beim Brand keine merklichen Gradienten zwischen Trennschicht und Faserwand aufweist. Des weiteren überrascht es, daß das erfindungsgemäße keramische Mikrohohlfasern, die aus einem Ausgangsmaterial aus reinem Aluminiumoxid durch Extrusion hergestellt wurden, eine Wandstärke von etwa 0,9 μm und einen Außendurchmesser von etwa 6 μm aufweisen, bei Messung in einer Zugprüfmaschine, wie sie in der technischen Keramik üblich ist, Zugfestigkeit bis zum Bruch von 3600 Mpa ergaben.

Die erfindungsgemäßen semipermeablen Mikrohohlfasern können in der Form von Whiskern, Kurzfasern, Langfasern, Stapelfasern, Häckseln, Gelegen, Filamenten, Geweben, Vliesen, Gestricken, Gewirken, Filzen Rovings, Folien, Papierlagen, Fäden, Seilen, Netzen usw. auch verwendet werden als Membranen, z.B. für die Dialyse, auch für die Mikrodialyse und Elektrodialyse, für Osmometer zur Molekulargewichtsbestimmung, als Molekularsiebe für die Flüssigkeits- und/oder Gastrennung, als Katalysatorträger, als Filter, wie Viren-, Bakterien-, Pilz-, Sporen-, Staub-, Heißgas-, Flugasche- oder Rußfilter, für die Wärmedämmung als Piezokeramik oder als Implantat, wie z.B. als Dialyse-, Knochen-, Zahn- oder Gewebe-Trägertransplantat. Bei der Kälteerzeugung kann der Retentatfluß einen Integralfestbettreaktor mit einer Packung gebrannter Mikrohohlfasern durchströmen; hierbei tritt das Permeat vorzugsweise aus dem Inneren der Mikrohohlfasern über deren Öffnungen des Lumens an Faserenden aus oder umgekehrt. Für filternde Abscheider der Heißgasfiltration, z.B. von Kraftwerken, sind semipermeable oder dichtgebrannte Filtergewebe geeignet.

Die erfindungsgemäßen dichten Mikrohohlfasern können in der Form von Whiskern, Kurzfasern, Langfasern, Stapelfasern, Häckseln, Gelegen, Filamenten, Geweben, Vliesen, Gestricken, Gewirken, Filzen, Rovings, Folien, Papierlagen, Fäden, Seilen, Netzen usw. auch verwendet werden für die Wärmedämmung, als hochtemperaturfestes Förderband, als Piezokeramik, als hochvakuumdichte Faser für den Lichttransport, z.B. bei Lasern, als Schmelzschutzschicht von Raumflugkörpern, für Dichtungen und Verkleidungen von Elektronenschweißgeräten, Vakuumkammern, Vakuumpumpen und anderen Vakuumeinrichtungen, als Metal-Ceramic-Composites, für Verbundwerkstoffe, als Armierungen anstelle von Stahl und anderen Armierungen im Bauwesen, als Elemente in der Elektrorheologie, z.B. als Flüssigkeitsträger und Flüssigkeitsleiter, in Sicherheitsfolien für Spezialpapiere und -folien, als gasgefüllte Folien, z. B. für Lebensmittel und Blutkonserven, als Trägermaterial für fälschungssichere Zahlungsmittel, für unbrennbare und unverrottbare Papierqualitäten, als Matrix zur Armierung von Metallschmelzen oder als Matrix von dünnwandigen Polymerbauteilen wie z.B. Stoßstangen.

Die Erfindung wird anhand der folgenden Beispiele noch näher erläutert:

Beispiel 1:

Zur Herstellung einer keramischen Mikrohohlfaser wurde eine Spinnvorrichtung der Firma Barnag, Deutschland, verwendet, die auf die besonderen Bedingungen des bevorzugten erfindungsgemäßen Verfahrens bezüglich des Düsendurchmessers, der Plazierung von Kernen und/oder Gaseinblaseinrichtungen im Düsenöffnungsbereich und die Einrichtung zur Verfestigung der Stränge angepaßt wurde. Als keramisches Ausgangsmaterial wurde eine keramische Masse aus einem Sol-Gel-Prozeß verwendet, die durch Mischen von $Al_2(OH)_5Cl^-2,5H_2O$ in Wasser und Polyvinylalkohol in Wasser gewonnen wurde. Dabei entfielen 20 kg Wasser auf 40 kg Polyvinylalkohol auf 60 kg $Al_2(OH)_5Cl^-2,5H_2O$. Das hierbei hergestellte Sol durch Rühren in ein Gel bzw. ein Sol-Gel überführt. Die erhaltene pastöse Masse wurde in einem Aufgabebehälter der Spinnvorrichtung gefüllt und mit einer Extrudierschnecke blasenfrei in den Extrudierkopf gedrückt. Die Fördertemperatur lag bei etwa 25 °C. Die pastöse Masse wurde durch mehr als 3000 ringförmige Düsenöffnungen des Extruderkopfes ausgeformt, wobei koaxiale Schikanen im Bereich jeder Düse als Kerne genutzt wurden. Die Unterseite des Extruderkopfes war gegen den Trocknungsschacht thermisch isoliert. Die Stränge wurden im Trocknungsschacht durch IR-Strahlung und Konvektionswärme auf etwa 140°C erhitzt und dadurch getrocknet und ausreichend verfestigt, so daß bei weiterem textilen Handhaben keine unbeabsichtigten Abmessungsänderungen auftraten. Die Abzugsgeschwindigkeit lag bei etwa 1200 m/min. Die erhaltenen grünen Mikrohohlfasern wiesen eine Wandstärke von etwa 5,5 μm und einen Außendurchmesser von etwa 33 μm auf. Durch Verstrecken dieser grünen Mikrohohlfasern, die noch einen geringen eingestellten Anteil an Restfeuchte aufwiesen, im Verhältnis 1:1,2 bei Zimmertemperatur wurde die Wandstärke auf etwa 4,5 μm und auf einen Außendurchmesser von etwa 28 μm geändert. Diese Mikrohohlfasern wurden nach langsamem Aufheizen bis auf 1600 °C über 1 Stunde gehalten und langsam abgeheizt. Die gebrannten Mikrohohlfasern hatten eine Wandstärke von etwa 0,9 µm und einen Außendurchmesser von etwa 6 µm.

Beispiele 2 und 3:

Die erfindungsgemäßen Mikrohohlfasern wurden entsprechend Beispiel 1 aus einer Masse auf Basis von Porzellan bzw. eines zeolithischen Magnesium-Alumosilicats hergestellt. In der Tabelle 1 sind die gemittelten Abmessungen der erfindungsgemäßen gebrannten Mikrohohlfasern und die Eigenschaften derselben im Vergleich zu bekannten Fasern wiedergegeben.

Tabelle 1:

| | Al$_2$O$_3$ (Beispiel 1) | Porzellan-Basis (Beispiel 2) | Zeolith (Mg-Al-Silicat) (Beispiel 3) | E-Glas, S-Glas | Kohlenstoff | Aramid |
|---|---|---|---|---|---|---|
| Außendurch-messer µm | 6 | 7 | 7,5 | 12 | 6-8 | 12 |
| Lumendurch-messer µm | 4,2 | 5 | 5,3 | 5 | ohne Lumen | ohne Lumen |
| Wandstärke µm | 0,9 | 1 | 1,1 | 3,5 | ohne Lumen | ohne Lumen |
| Reindichte g/cm$^3$ | 3,9 | 2,5 | 2,4 | 2,0 | 1,8-2,0 | 1,45 |
| g/km (tex) | 42 | 39 | 37 | 240 | | |
| Zugfestigkeit GPa | 3,6 | | | 1,7-3,5 | 1,86-5,6 | 3,0 |

EP 1 018 495 B1

**Patentansprüche**

1. Verfahren zur Herstellung von Mikrohohlfasern aus keramischem Material oder von grünen Mikrohohlfasern, wobei eine Dispersion und/oder Suspension, die den Vorläufer eines keramischen Materials mit einer Korngröße von unter 2μm und ein unter Hitzeeinwirkung entfernbares Bindemittel enthält, zu grünen Mikrohohlfasern ausgeformt und das Bindemittel gegebenenfalls unter Hitzeeinwirkung entfernt wird, wobei der Hohlraum in Form eines Lumens ausgebildet ist und wobei die Mikrohohlfaser eine Wandstärke von 0,01 bis 15 μm und einen Außendurchmesser von 0,5 bis 35 μm aufweist und die Schwankung von Wandstärke und Außendurchmesser nicht mehr als +/- 6% beträgt.

2. Verfahren nach Anspruch 1, **dadurch gekennzeichnet, dass** die Ausformung der grünen Mikrohohlfaser nach dem Blasverfahren, dem Extrusionsverfahren, dem Vakuum-Extrusionsverfahren oder dem Spinnverfahren erfolgt.

3. Verfahren nach Anspruch 1 oder 2, **dadurch gekennzeichnet, dass** das Spinnverfahren angewandt wird, wobei die Dispersion in einen Aufgabebehälter oder ein Druckgefäß einer Spinnvorrichtung gegeben, die Dispersion strömend bei einer Temperatur von 20 bis 400°C durch die Spinnvorrichtung gefördert und durch Düsenringöffnungen oder Düsenprofilöffnungen gepresst wird, die im Bereich der Düsenöffnungen erzeugten Teilströme mittig durch Kerne und/oder durch Einrichtungen zum Einblasen eines Gases geteilt werden und die Teilströme durch Erwärmen, durch Bestrahlen oder durch Zutritt eines Reaktionspartners zu grünen Mikrohohlfasern verfestigt wird und diese gegebenenfalls unter Hitzeeinwirkung in Mikrohohlfasern überführt wird.

4. Verfahren nach einem der vorstehenden Ansprüche, **dadurch gekennzeichnet, dass** die mittlere Korngröße des keramischen Vorläufermaterials unter 2 μm liegt.

5. Verfahren nach einem der vorstehenden Ansprüche, **dadurch gekennzeichnet, dass** die Mikrohohlfaser im Wesentlichen aus einem oxidischen, silikatischen, nitridischen und/oder carbidischen Keramikmaterial besteht.

6. Verfahren nach einem der vorstehenden Ansprüche, **dadurch gekennzeichnet, dass** die grünen Mikrohohlfasern durch Brennen zu semipermeablen oder zu dichten Mikrohohlfasern verdichtet beziehungsweise gebrannt werden.

7. Verfahren nach einem der vorstehenden Ansprüche, **dadurch gekennzeichnet, dass** eine Trennschicht auf den grünen oder keramischen Mikrohohlfasern ausgebildet wird.

8. Verfahren nach Anspruch 7, **dadurch gekennzeichnet, dass** die Trennschicht eine Wandstärke von 2,5 μm oder weniger aufweist.

9. Verfahren nach Anspruch 7 oder 8, **dadurch gekennzeichnet, dass** die mit einer anorganischen Trennschicht beschichteten Mikrohohlfasern gebrannt werden.

10. Verfahren nach einem der vorstehenden Ansprüche, **dadurch gekennzeichnet, dass** endlose Mikrohohlfasern hergestellt werden.

11. Verfahren nach einem der vorstehenden Ansprüche, **dadurch gekennzeichnet, dass** die Mikrohohlfasern zu Whiskern, Kurzfasern, Langfasern, Stapelfasern, Häckseln, Gelegen, Filamenten, Geweben, Vliesen, Gestricken, Gewirken, Filzen, Rovigns, Folien, Papierlagen, Fäden, Seilen oder Netzen verarbeitet werden.

12. Verfahren nach einem der vorstehenden Ansprüche, **dadurch gekennzeichnet, dass** die Mikrohohlfasern zu Filament-Modulen, Laminaten, Preforms oder Prepregs weiterverarbeitet werden.

**Claims**

1. Procedure for producing hollow microfibers from ceramic material, or unfired hollow microfibers, in which a dispersion and/or suspension medium containing the precursor of a ceramic material with a grain diameter of less than 2 μm and a binder which can be removed by the application of heat is molded into unfired hollow microfibers, and in which, if applicable, the binder is removed through the application of heat, the hollow space being in the shape of a lumen and the hollow microfibers having a wall thickness of 0.01 to 15 μm and an external diameter of 0.5 to 35 μm, with the variance in wall thickness and outer diameter not exceeding +/- 6%.

**2.** Procedure according to Claim 1, **characterized in that** the unfired hollow microfibers are formed by blow molding, extrusion, vacuum extrusion or spinning.

**3.** Procedure according to Claim 1 or 2, **characterized in that** spinning is used, with the dispersion being poured into a reception container or a pressure container of a spinning device, the flow of the dispersion being directed through the spinning device at a temperature of between 20° and 400°C and pressed through a jet nozzle or a profile jet nozzle, the partial streams generated in the area of the nozzles being separated in the middle by cores and/or devices for injecting a gas, and the partial streams being densified into unfired hollow microfibers by heating, radiation or addition of a reaction partner, and these unfired hollow microfibers, if applicable, being transformed into hollow microfibers under heat application.

**4.** Procedure according to one of the preceding claims, **characterized in that** the average grain diameter of the ceramic precursor material is less than 2 $\mu$m.

**5.** Procedure according to one of the preceding claims, **characterized in that** the hollow microfiber essentially consists of oxidic, silicate, nitridic and/or carbidic ceramics material.

**6.** Procedure according to one of the preceding claims, **characterized in that** the unfired hollow microfibers are densified and/or baked by firing to produce semipermeable or impermeable hollow microfibers.

**7.** Procedure according to one of the preceding claims, **characterized in that** the unfired or ceramic hollow microfibers are coated with a separating layer.

**8.** Procedure according to Claim 7, **characterized in that** the separating layer has a wall thickness of 2.5 $\mu$m or less.

**9.** Procedure according to Claim 7 or 8, **characterized in that** the hollow microfibers coated with an anorganic separating layer are fired.

**10.** Procedure according to one of the preceding claims, **characterized in that** continuous hollow microfibers are produced.

**11.** Procedure according to one of the preceding claims, **characterized in that** the hollow microfibers are used in the production of whiskers, short fibers, long fibers, staple fibers, shredded fabrics, layered fabrics, filaments, fabrics, non-wovens, knitted fabrics, warp-knitted fabrics, felts, rovings, foils, paper layers, threads, ropes or nets.

**12.** Procedure according to one of the preceding claims, **characterized in that** the hollow microfibers can be processed to filament modules, laminates, preforms or prepegs.

**Revendications**

**1.** Procédé pour la production de microfibres creuses à partir de matériau céramique ou de microfibres creuses noncuites, dans lequel une dispersion et/ou suspension contenant le précurseur d'un matériau céramique avec un diamètre des particules de moins de 2 $\mu$m et un liant qui peut être éliminé par application de chaleur, est formée en microfibres creuses non-cuites et dans lequel, le cas échéant, le liant est éliminé par application de chaleur, l'espace creux ayant la forme d'un lumen et les microfibres creuses ayant une épaisseur de paroi de 0.01 à 15 $\mu$m et un diamètre externe de 0.5 à 35 $\mu$m, la fluctuation de l'épaisseur de la paroi et du diamètre externe ne dépassant pas +/- 6%.

**2.** Procédé selon la revendication 1, **caractérisé en ce que** les microfibres creuses non-cuites sont façonnées par les procédés de soufflage, d'extrusion, d'extrusion sous vide ou de tissage.

**3.** Procédé selon revendication 1 ou 2, **caractérisé en ce que** le procédé utilisé est le procédé de filage, la dispersion étant versée dans un récipient de réception ou un récipient pressurisé d'un dispositif de filage, la dispersion étant acheminée à travers ledit dispositif de filage à une température entre 20°C et 400°C et pressée par des buses ou des buses à profil, les flux partiels produits au niveau des buses étant séparés par des noyaux et/ou par des dispositifs d'injection de gaz, et lesdits flux partiels étant densifiés par réchauffement, radiation ou adjonction d'un activateur pour former des microfibres creuses non-cuites et, le cas échéant, lesdites microfibres non-cuites étant transformées en microfibres creuses sous application de chaleur.

4. Procédé selon l'une des revendications précédentes, **caractérisé en ce que** le diamètre des particules du matériau précurseur est de moins de 2 μm.

5. Procédé selon l'une des revendications précédentes, **caractérisé en ce que** la microfibre creuse consiste essentiellement en un matériau de céramique d'oxyde, de silicate, de nitrure et/ou de carbure.

6. Procédé selon l'une des revendications précédentes, **caractérisé en ce que** le microfibres creuses non-cuites sont densifiées et/ou cuites par cuisson pour former des microfibres creuses semi-perméables ou imperméables.

7. Procédé selon l'une des revendications précédentes, **caractérisé en ce qu'**une couche séparatrice est appliquée sur les microfibres creuses non-cuites ou céramiques.

8. Procédé selon la revendication 7, **caractérisé en ce que** la couche séparatrice a une épaisseur de la paroi de 2,5 μm ou moins.

9. Procédé selon la revendication 7 ou 8, **caractérisé en ce que** les microfibres creuses non-cuites enrobées d'une couche séparatrice anorganique sont cuites.

10. Procédé selon l'une des revendications précédentes, **caractérisé en ce qu'**on produit des microfibres creuses continues.

11. Procédé selon l'une des revendications précédentes, **caractérisé en ce que** les microfibres creuses sont transformées en whiskers, fibres courtes, fibres longues, fibres discontinues, tissus déchiquetés, tissus stratifiés, filaments, tissus, tissus non tissés, tissus tricotés, tissus à maille jetée, feutres, rovings, feuilles, couches de papier, fils, cordes ou filets.

12. Procédé selon l'une des revendications précédentes, **caractérisé en ce que** les microfibres creuses sont transformées en modules de filaments, laminés, préformes et prépregs.